(19) Europäisches Patentamt
European Patent Office
Office européen des brevets

(11) **EP 4 458 164 A1**

(12) **EUROPEAN PATENT APPLICATION**
published in accordance with Art. 153(4) EPC

(43) Date of publication:
**06.11.2024 Bulletin 2024/45**

(51) International Patent Classification (IPC):
*A23L 17/60* [(2016.01)]   *A23L 33/175* [(2016.01)]
*A23L 33/185* [(2016.01)]   *A23P 10/20* [(2016.01)]
*A23P 20/18* [(2016.01)]   *A23P 20/10* [(2016.01)]

(21) Application number: **22916478.5**

(52) Cooperative Patent Classification (CPC):
**A23L 17/60; A23L 33/175; A23L 33/185;
A23P 10/20; A23P 20/10; A23P 20/18**

(22) Date of filing: **01.12.2022**

(86) International application number:
**PCT/KR2022/019336**

(87) International publication number:
**WO 2023/128332 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021  KR 20210190175**

(71) Applicant: **CJ CheilJedang Corporation
Seoul 04560 (KR)**

(72) Inventors:
• LEE, In
  Seoul 04560 (KR)
• JEONG, A Young
  Seoul 04560 (KR)
• AN, Jungap
  Seoul 04560 (KR)
• RIM, Jin-Seong
  Seoul 04560 (KR)

(74) Representative: **Reddie & Grose LLP
The White Chapel Building
10 Whitechapel High Street
London E1 8QS (GB)**

(54) **METHOD FOR PRODUCING BIOMASS GRANULES WITH IMPROVED FLUIDITY**

(57)    The present invention relates to a method for producing biomass with improved fluidity. Biomass produced by the method for producing biomass with improved fluidity according to the present invention uses a solid core component in a spray-coating process, and thus, a dried product with increased bulk density and free-flowing capability, compared to the case of not including a core component or using the same biomass dried product, can be obtained.

EP 4 458 164 A1

**Description**

[TECHNICAL FIELD]

Cross-reference to related application(s)

The present application claims the benefit of the priority based on Korean Patent Application No. 10-2021-0190175 filed on December 28, 2021, and the entire contents disclosed in the documents of the corresponding Korean patent application are incorporated as part of the present description.

The present invention relates to a preparation method of biomass granules with improved flowability comprising spraying and coating a biomass fermented solution or a concentrated solution on a specific core component.

[BACKGROUND ART]

Microalgae are one of longest-lived organisms on Earth, and they not only produce biomass but also capture carbon dioxide from the atmosphere. In general, biomass is a general term for biological organisms such as plants that synthesize organic matters by receiving solar energy and animals and microorganisms that use them as food, and the like. The purpose of drying biomass derived from microalgae is because the yield is good in conversion of high value-added substances such as biodiesel, omega 3 and the like.

In this regard, Korean Patent Publication No. 10-2012-0055918 discloses a preparation method of bio-oil from fibrous biomass using Thraustochytrid microalgae, and Korean Patent Publication No. 10-2012-0125194 discloses a method for producing biomass by culturing microalgae in beer industrial wastewater, and Korean Patent No. 10-1298942 discloses a production method of biomass using microalgae.

Conventionally, the process of producing dry biomass is largely divided into a process of harvesting cultured microalgae and a process of dehydrating and drying to remove moisture from the harvested microalgae. In order to produce dry biomass, first, cultured microalgae must be harvested. Technologies for harvesting microalgae include membrane filtration, coagulation, centrifugation, and the like, and among them, membrane filtration is mainly used as a technology with high possibility of mass production.

On the other hand, as a general drying method for removing moisture from harvested microalgae, there is a method using a drum dryer or a spray dryer. Biomass is a fermented solution comprising an oxidation-sensitive component, and the oxidation-sensitive component often comprises lipids, particularly, highly unsaturated fatty acids. Due to the high lipid content, when dried with a generally used drum dryer or spray dryer, the particle size and bulk density are not good, and the flowability is low, so there is a limit to its use as an actual product.

Accordingly, the present inventors have tried to develop a method for improving physical properties of biomass. As a result, they have confirmed that when a specific core component is added to a fluidized bed granulator, and a biomass fermented solution is sprayed and coated at the bottom of the fluidized bed granulator to prepare biomass granules, compared to using no core component or adding the same biomass dry matter, the bulk density is increased and free-flowing is possible, thereby completing the present invention.

[DISCLOSURE]

[TECHNICAL PROBLEM]

An object of the present application is to provide a preparation method of biomass granules, comprising:

1) preparing a biomass fermented solution or a concentrated solution; and
2) spraying and coating the fermented solution or concentrated solution of 1) on a core material to form biomass granules.

Another object of the present application is to provide a biomass granule with improved flowability, comprising a core material which is an amino acid or a plant-derived protein, and a biomass fermented solution or a concentrated solution, wherein the core material is coated with the biomass fermented solution or concentrated solution.

[TECHNICAL SOLUTION]

The present invention
provides a preparation method of biomass granules, comprising:

1) preparing a biomass fermented solution or a concentrated solution; and

2) spraying and coating the fermented solution or concentrated solution of 1) on a core material to form biomass granules.

The biomass fermented solution or concentrated solution of the step 1) may be obtained by culturing microalgae of the genus *Schizochytrium* or the genus *Thraustochytrium.*

The biomass fermented solution or concentrated solution may comprise microalgae of the genus *Schizochytrium* or the genus *Thraustochytrium.*

The term used in the present description, "genus *Schizochytrium*" is one of the genus names belonging to the family Thraustochytriaceae of the order Traustochytriales, and may be interchangeably with the term "genus *Schizochytrium*". In addition, the term "genus *Thraustochytrium*" is one of the genus names belonging to the family Thraustochytriaceae of the order Traustochytriales, and may be interchangeably with the term "genus *Thraustochytrium*". Moreover, the term "microalgae" means organisms that cannot be seen with naked eyes among plants that photosynthesize with chlorophyll and can only be seen through a microscope and live freely floating in water, and are also called phytoplankton.

The core material of the step 2) may be a protein, and may be an amino acid or a plant-derived protein.

In the core material, the amino acid may be at least one selected from the group consisting of lysine (Lys), methionine (Met), histidine (His) and arginine (Arg), but not limited thereto.

In the core material, the plant-derived protein may be a soy protein concentrate (SPC) or soy bean molasses (SBM), but not limited thereto.

The step 2) is performed using a fluidized bed granulator. The biomass solid and core material to be prepared as granules are fluidized, and the biomass fermented solution or concentrated solution to coat the biomass solid and core material is sprayed from the bottom of the fluidized bed granulator.

The step 2) may be performed by a bottom spray coating method or a bottom spray coating method, and preferably, it may be performed by a bottom spray coating method. In case of the bottom spray coating method, compared to the top spray coating method, there is an advantage that granulation/spraying and coating are possible even with a small amount of the core material.

In addition, the present invention provides a biomass granule with improved flowability, comprising a core material which is an amino acid or a plant-derived protein, and a biomass fermented solution or a concentrated solution, wherein the core material is coated with the biomass fermented solution or concentrated solution.

The biomass fermented solution or concentrated solution may comprise microalgae of the genus *Schizochytrium* or the genus *Thraustochytrium.*

The "biomass fermented solution or concentrated solution" can form a coating layer which coats the core material, and in the present description, the "biomass fermented solution or concentrated solution" may be used interchangeably with the term "coating solution".

The coating may be performed by the bottom spray coating method.

The biomass granule may comprise 5 % by weight or more of the core material based on the total weight of the biomass granule, and it may contain 5 to 30 % by weight, 5 to 25 % by weight, 10 to 30 % by weight, 10 to 25 % by weight, 15 to 30 % by weight, 15 to 25 % by weight.

In the core material, the amino acid may be at least one selected from the group consisting of lysine (Lys), methionine (Met), histidine (His) and arginine (Arg), but not limited thereto.

In the core material, the plant-derived protein may be a soy protein concentrate (SPC) or soy bean molasses (SBM), but not limited thereto.

The biomass granule contains an amino acid or a plant-derived protein as the core material, so the protein content may be 15 % by weight or more, 10 % by weight ore more, 5 % by weight or more based on the total weight of the biomass granule.

The biomass granule may be prepared by a preparation method of biomass granules, comprising:

1) preparing a biomass fermented solution or a concentrated solution; and

2) spraying and coating the fermented solution or concentrated solution of 1) on a core material to form biomass granules.

The angle of repose (°) of the biomass granule may be 33° or less, or 31° or less, or 30° or less.

The angle of repose is one of methods for evaluating flowability of granules, and refers to measuring the angle of a triangular pile of granules formed by flowing a certain amount of granules using an angle of repose measuring instrument, and the angle can be calculated by measuring the base side and height of the triangle to obtain $\tan\theta$. The smaller the angle of repose, the better the flowability of the granules.

The biomass granule may have a Carr's index value of 15% or less, or 14% or less, or 13% or less.

The Carr's index is one of methods for evaluating flowability of granules, and it may be calculated by substituting into the following formula using the measured packing density and natural density of granules.

[Formula]

$$\text{Carr's Index} = (\text{packing density} - \text{natural density})/\text{packing density} \times 100$$

The smaller the Carr's index value, the better the flowability of the granules.

The biomass granule contains an amino acid or a plant-derived protein as the core material, so it has a high protein content. In addition, the angle of repose is low and the Carr's index value is low, so the flowability is improved, and thus the usability is high compared to biomass powder prepared by the conventional method.

[ADVANTAGEOUS EFFECTS]

The biomass prepared by the preparation method of biomass with improved flowability of the present invention uses a solid core component in the spraying and coating process, so that a dried product in which the bulk density is increased and free-flowing is possible can be secured, compared to using no core component or the same biomass dry matter.

[MODE FOR INVENTION]

Hereinafter, the present invention will be described in more detail by examples. However, these examples are intended to illustratively describe at least one specific embodiment, and the scope of the present invention is not limited by these examples.

**<Preparation of microalgae fermented solution>**

In order to prepare biomass powder, a Schizochytrium fermented solution was recovered from a fermenter. Specifically, for the Schizochytrium sp. strain, culturing for 60 hours was progressed by supplying a glucose carbon source of 35% based on the total culturing solution. Culturing for about 20 hours was carried out using MJW02 medium sterilized on the purpose of seed culture in a 500 mL flask under the condition of 30°C, 150 rpm. Seed cultured flask was aliquoted and inoculated in a 5L fermenter, and culturing was performed in the sterilized MJW02 medium and under the culture environment 30°C, 500 rpm, 1.5 vvm, pH 5-8 conditions.

**Example 1. Preparation of biomass granules depending on core material type**

**Example 1-1. Preparation of biomass granules containing lysine as core material**

The biomass fermented solution in which fermentation was completed was dried to prepare biomass granules containing lysine as a core material.

Specifically, utilizing a fluidized bed granulator (Daesung Machinery, PD-40), the biomass solid (g) and lysine 50g as the core material were added, and 1400 to 1600g of the biomass fermented solution was sprayed and dried by the bottom spray coating method for 2 hours as the injection air temperature was 100 to 130°C and the internal temperature in the dryer was 60 to 80°C to form fluidized bed granules. The core material was prepared at a level of 20% in the final drying-completed sample. The added fermented solution content (g) and the core material content (%) in the final sample were shown in Table 1. In Table 1, the biomass solid (g) is a calculation of the solid content comprised in the biomass fermented solution.

**Example 1-2. Preparation of biomass granules containing methionine as core material**

By applying the contents described in Table 1, biomass granules containing methionine as a core material were prepared by the same method as the method of preparing in Example 1-1.

**Example 1-3. Preparation of biomass granules containing tryptophan as core material**

By applying the contents described in Table 1, biomass granules containing tryptophan as a core material were prepared by the same method as the method of preparing in Example 1-1.

**Example 1-4. Preparation of biomass granules containing histidine as core material**

By applying the contents described in Table 1, biomass granules containing histidine as a core material were prepared by the same method as the method of preparing in Example 1-1.

**Example 1-5. Preparation of biomass granules containing arginine as core material**

By applying the contents described in Table 1, biomass granules containing arginine as a core material were prepared by the same method as the method of preparing in Example 1-1.

[Table 1]

|  | Example 1-1 | Example 1-2 | Example 1-3 | Example 1-4 | Example 1-5 |
|---|---|---|---|---|---|
| Core material | Amino acid | | | | |
|  | Lys | Met | Trp | His | Arg |
| Core material content (g) | 50 | | | | |
| Sprayed biomass fermented solution (g) | 1528 | 1476 | 1510 | 1498 | 1532 |
| Biomass solid (g) | 191 | 185 | 189 | 187 | 192 |
| Core material content in final sample (%) | 20.7 | 21.3 | 20.9 | 21.1 | 20.7 |

**Example 1-6. Preparation of biomass granules containing soy protein concentrate as core material**

The biomass fermented solution in which fermentation was completed was dried to prepare biomass granules containing soy protein concentrate as a core material.

Specifically, utilizing a fluidized bed granulator (Daesung Machinery, PD-40), 1485g of the biomass fermented solution was sprayed and dried on soy protein concentrate 50g as the core material by the bottom spray coating method under the temperature condition of 60~80°C to form fluidized bed granules. The core material was prepared at a level of 20% in the final drying-completed sample. The added fermented solution content (g) and the core material content (%) in the final sample were shown in Table 2.

**Example 1-7. Preparation of biomass granules containing soy bean molasses as core material**

By applying the contents described in Table 2, biomass granules containing soy bean molasses as a core material were prepared by the same method as the method of preparing in Example 1-6.

[Table 2]

|  | Example 1-6 | Example 1-7 |
|---|---|---|
| Core material | Plant protein | |
|  | SPC | SBM |
| Core material content (g) | 50 | |
| Sprayed biomass fermented solution (g) | 1485 | 1507 |
| Biomass solid (g) | 186 | 188 |
| Core material content in final sample (%) | 21.2 | 21.0 |

**Comparative example 1. Preparation of biomass granules conatining no care material**

Utilizing a fluidized bed granulator (Daesung Machinery), 1520g of the biomass fermented solution was sprayed and dried on the biomass solid 190g without the core material by the bottom spray coating method under the temperature condition of 60~80°C to form fluidized bed granules. The biomass solid (g) content and the content of the sprayed biomass fermented solution were shown in Table 3.

**Comparative example 2. Preparation of biomass granules contianing biomass powder as core material**

By applying the contents described in Table 3, biomass granules containing biomass powder as a core material by the same method as the method of preparing in Example 1-1. The biomass powder was prepared by drying using a spray dryer (Ein system) under the injection temperature of 150°C and the internal temperature of the dryer of 80°C.

**[Table 3]**

|  | Comparative example 1 | Comparative example 2 |
|---|---|---|
| Core material | Control | |
| | Unused | Biomass |
| Core material content (g) | 0 | 50 |
| Sprayed biomass fermented solution (g) | 1520 | 1548 |
| Biomass solid (g) | 190 | 194 |
| Core material content in final sample (%) | 0 | 20.5 |

**Experimental example 1. Evaluation of characteristic of biomass granules depending on type of core material**

**Experimental example 1-1. Analysis of moisture content, angle of repose and flowability of biomass granules depending on type of core material**

In order to evaluate the flowability of biomass granules depedning on the type of the core material, the moisture content, angle of repose and flowability of each biomass granule prepared in Example 1-1 to Example 1-7, Comparative example 1 and Comparative example 2 were anlayzed as follows.

Specifically, the moisture content was measured by loss on drying according to General Ingredients Test Method of Food Code. 3 ~ 5 g of the sample was accurately weighed, and added in a 105°C dry oven to dry for 3 hours or more, and cooled in a desicator at a room temperature for 30 minutes or more and then the weight was measured. It was dried in the dry oven for 1 to 2 hours agains and cooled and the weight was weighed, and then it was repeatedly measured until the content was reached.

For the angle of repose, the angle of a triangular pile of granules formed by flowing a certain amount of granules using an angle of repose measuring instrument was measured. The angle can be calculated by measuring the base side and height of the triangle to obtain $\tan\theta$. The flowability was evaluated using the value of the angle of repose based on Table 4 below. The evaluation result of the measured moisture content, angle of repose and flowability was shown in Table 5 below.

**[Table 4]**

| Angle of repose ($\theta$) | Flowability |
|---|---|
| <25 | Excellent |
| 25-30 | Very Good |
| 31-35 | Good |
| 36-40 | Fair |
| 41-45 | Passible but flow aid might be needed |
| 46-55 | Poor-agitation or vibration needed |
| >56 | Very Poor |

**[Table 5]**

| | Exam ple 1-1 | Exam ple 1-2 | Exam ple 1-3 | Exam ple 1-4 | Exam ple 1-5 | Exam ple 1-6 | Exam ple 1-7 | Compara tive example 1 | Compara tive example 2 |
|---|---|---|---|---|---|---|---|---|---|
| Moisture (%) | 1.06 | 0.95 | 1.02 | 0.88 | 0.99 | 1.05 | 1.00 | 1.65 | 1.12 |
| Angle of repose (°) | 26 | 25 | 26 | 25 | 25 | 25 | 26 | 53 | 33 |
| Flowabili ty | Very Good | Very Good | Very Good | Very Good | Very Good | Very Good | Very Good | Poor- agitation | Good |

As a result, as shown in Table 5, it was confirmed that the biomass granules containing an amino acid such as lysine, methionine, tryptophan, histidine and arginine, and the biomass granules containing a plant-derived protein of soy protein concentrate and soy bean molasses, as the core material, had better flowability, due to low moisture content and small angle of repose, compared to the biomass granules containing no core material or biomass granules containing biomass powder as a core material.

**Experimental example 1-2. Analysis of natural density, packing density, Carr's Index and flowability of biomass granules depending on type of core material**

In order to evalute the flowability of biomass granules depending on the type of the core material, the natrual density, packing density, Carr's index and flowability of each biomass granule prepared in Example 1-1 to Example 1-7, Comparative example 1 and Comparative example 2 were analyzed as follows.

Specifically, the natural density was measured by the following method. After measuring the mass of an empty container, a sample was sufficiently filled up to the top of the container, and the sample stacked on the container was cut into a flat plate and the mass was measured. After measuring the mass, it was repeated 5 times or more until the difference between the measured values was within 0.3%. It was calculated by substituting the measured values into the following formula.

Natural density = (weight of empty container fully filled with powder (g) - wieght of empty container (g))/ volume of container (100 cm$^2$) [Formula]

The packing density was measured by the following method. After measuring the mass of the empty container, an auxiliary cylinder was connected to the top, and a sample was sufficiently filled to the tope of the auxiliary container. Then, tapping was performed until ther was no change in volume more than 1000 times or more, and the auxiliary container was removed, and then the sample was cut into a flat plate and the mass was measured. It was repeated 5 times or more until the difference between the measured values was within 0.3%. It was calculated by substituting the measured values into the following formula.

Packing density = (weight of cylinder fully filled with powder after tapping (g) - weight of cylinder (g))/ volume of cylinder (100 cm$^2$) [Formula]

Carr's index is widely used as an indirect index that indicates flowability, and it was calculated by substituting the measured packing density and natural density. It can be evaluated that the smaller this value, the better the flowability.

[Formula]

$$\text{Carr's Index} = (\text{packing density} - \text{natural density})/\text{packing density} \times 100$$

The flowability was evaluated using the value of Carr's index based on Table 6 below. The evaluation result of the measured natural density, packing density, Carr's index and flowability of the biomass granules was shown in Table 7 below.

**[Table 6]**

| Carr's index (%) | Flowability |
|---|---|
| <10 | Excellent |
| 11-15 | Good |
| 16-20 | Fair |
| 21-25 | Passable |
| 26-31 | Poor |
| 32-39 | Very poor |
| >40 | Very, very poor |

**[Table 7]**

| | Example 1-1 | Example 1-2 | Example 1-3 | Example 1-4 | Example 1-5 | Example 1-6 | Example 1-7 | Comparative example 1 | Comparative example 2 |
|---|---|---|---|---|---|---|---|---|---|
| Natural density (g/ml) | 0.48 | 0.52 | 0.54 | 0.52 | 0.52 | 0.53 | 0.51 | 0.41 | 0.41 |
| Packing density (g/ml) | 0.53 | 0.58 | 0.6 | 0.58 | 0.57 | 0.58 | 0.56 | 0.57 | 0.53 |
| Carr's Index (%) | 9.1 | 11.5 | 9.4 | 9.6 | 10.1 | 9.1 | 7.7 | 26.9 | 22.4 |
| Flowability | Excellent | Good | Excellent | Excellent | Good | Excellent | Excellent | Poor | Passable |

As a result, as shown in Table 7, it was confirmed that the biomass granules containing an amino acid such as lysine, methionine, tryptophan, histidine and arginine, and the biomass granules containing a plant-derived protein of soy protein concentrate and soy bean molasses, as the core material, had better flowability, as they exhibited high natural density and a significantly low Carr's index value, compared to the biomass granules containing no core material or biomass granules containing biomass powder as a core material.

**Example 2. Preparation of biomass granules depending on conetnt of core material (lysine and soy protein concentrate)**

**Example 2-1. Preparation of biomass granules containing 7.4% of lysine as core material in final sample**

In order to evaluate the difference of flowability depending on the content of the core material, by applying the contents described in Table 8, biomass granules containing 7.4% of lysine as a core material in the final sample were prepared.

**Example 2-2. Preparation of biomass granules containing 9.1% of lysine as core material in final sample**

In order to evaluate the difference of flowability depending on the content of the core material, by applying the contents described in Table 8, biomass granules containing 9.1% of lysine as a core material in the final sample were prepared.

**Example 2-3. Preparation of biomass granules containing 11.5% of lysine as core material in final sample**

In order to evaluate the difference of flowability depending on the content of the core material, by applying the contents described in Table 8, biomass granules containing 11.5% of lysine as a core material in the final sample were prepared.

**Example 2-4. Preparation of biomass granules containing 16.4% of lysine as core material in final sample**

In order to evaluate the difference of flowability depending on the content of the core material, by applying the contents described in Table 8, biomass granules containing 16.4% of lysine as a core material in the final sample were prepared.

**Example 2-5. Preparation of biomass granules containing 28.7% of lysine as core material in final sample**

In order to evaluate the difference of flowability depending on the content of the core material, by applying the contents described in Table 8, biomass granules containing 28.7% of lysine as a core material in the final sample were prepared.

**[Table 8]**

|  | Example 2-1 | Example 2-2 | Example 2-3 | Example 2-4 | Example 2-5 |
|---|---|---|---|---|---|
| Core material | Lysine | | | | |
| Core material content (g) | 50g | | | | |
| Sprayed biomass fermented solution (g) | 2512 | 1988 | 1535 | 1022 | 498 |
| Biomass solid (g) | 628 | 497 | 384 | 256 | 125 |
| Core material content in final sample (%) | 7.4 | 9.1 | 11.5 | 16.4 | 28.7 |

**Example 2-6. Preparation of biomass granules containing 7.3% of soy protein concentrate (SPC) as core material in final sample**

In order to evaluate the difference of flowability depending on the content of the core material, by applying the contents described in Table 9, biomass granules containing 7.3% of soy protein concentrate (SPC) as a core material in the final sample were prepared.

**Example 2-7. Preparation of biomass granules containing 9.0% of soy protein concentrate (SPC) as core material in final sample**

In order to evaluate the difference of flowability depending on the content of the core material, by applying the contents described in Table 9, biomass granules containing 9.0% of soy protein concentrate (SPC) as a core material in the final sample were prepared.

**Example 2-8. Preparation of biomass granules containing 12.0% of soy protein concentrate (SPC) as core material in final sample**

In order to evaluate the difference of flowability depending on the content of the core material, by applying the contents described in Table 9, biomass granules containing 12.0% of soy protein concentrate (SPC) as a core material in the final sample were prepared.

**Example 2-9. Preparation of biomass granules containing 16.7% of soy protein concentrate (SPC) as core material in final sample**

In order to evaluate the difference of flowability depending on the content of the core material, by applying the contents described in Table 9, biomass granules containing 16.7% of soy protein concentrate (SPC) as a core material in the final sample were prepared.

**Example 2-10. Preparation of biomass granules containing 27.8% of soy protein concentrate (SPC) as core material in final sample**

In order to evaluate the difference of flowability depending on the content of the core material, by applying the contents described in Table 9, biomass granules containing 27.8% of soy protein concentrate (SPC) as a core material in the final sample were prepared.

[Table 9]

|  | Example 2-6 | Example 2-7 | Example 2-8 | Example 2-9 | Example 2-10 |
|---|---|---|---|---|---|
| Core material | SPC | | | | |
| Core material content (g) | 50 | | | | |
| Sprayed biomass fermented solution (g) | 2540 | 2020 | 1467 | 999 | 519 |
| Biomass solid (g) | 635 | 505 | 367 | 250 | 130 |
| Core material content in final sample (%) | 7.3 | 9.0 | 12.0 | 16.7 | 27.8 |

**Experimental example 2. Evaluation of flowability of biomass granules depending on difference in contents of core material**

**Experimental example 2-1. Analysis of moisture content, angle of repose and flowability of biomass granules depending on content of core material**

In order to evaluate the flowability of biomass granules depending on the content of the core material, the moisture content, angle of repose and flowability of each biomass granule prepared in Example 2-1 to Example 2-10 were analyzed by the same method as Experimental example 1-1, and the result was shown in Table 10 and Table 11 below.

[Table 10]

|  | Example 2-1 | Example 2-2 | Example 2-3 | Example 2-4 | Example 2-5 |
|---|---|---|---|---|---|
| Moisture (%) | 0.83 | 1.01 | 1.07 | 0.98 | 1.22 |
| Angle of repose (°) | 26 | 26 | 24 | 25 | 25 |
| Flowability | Very Good | Very Good | Excellent | Very Good | Very Good |

[Table 11]

|  | Example 2-6 | Example 2-7 | Example 2-8 | Example 2-9 | Example 2-10 |
|---|---|---|---|---|---|
| Moisture (%) | 0.86 | 0.94 | 0.88 | 1.11 | 1.3 |
| Angle of repose (°) | 26 | 27 | 26 | 25 | 25 |
| Flowability | Very Good | Very Good | Very Good | Very Good | Very Good |

As a result, it was confirmed that as the sprayed biomass fermented solution content was increased and the core material content in the final sample was decreased, the size of the granules was increased, but the value of the angle of repose was not changed significantly, and the content of the moisture was reduced.

**Experimental example 2-2. Analysis of natural density, packing density, Carr's Index and flowability of biomass granules depending on content of core material**

In order to evaluate the flowability of biomass granules depending on the content of the core material, the natural density, packing density, Carr's index and flowability of each biomass granule prepared in Example 2-1 to Example 2-10 were analyzed by the same method as Experimental example 1-2, and the result was shown in Table 12 and Table 13 below.

# EP 4 458 164 A1

**[Table 12]**

|  | Example 2-1 | Example 2-2 | Example 2-3 | Example 2-4 | Example 2-5 |
|---|---|---|---|---|---|
| Natural density (g/ml) | 0.62 | 0.57 | 0.52 | 0.53 | 0.46 |
| Packing density (g/ml) | 0.67 | 0.64 | 0.59 | 0.59 | 0.54 |
| Carr's Index | 8.6 | 10.1 | 11.3 | 10.1 | 13.9 |
| Flowability | Excellent | Good | Good | Good | Good |

**[Table 13]**

|  | Example 2-6 | Example 2-7 | Example 2-8 | Example 2-9 | Example 2-10 |
|---|---|---|---|---|---|
| Natural density (g/ml) | 0.63 | 0.60 | 0.57 | 0.60 | 0.56 |
| Packing density (g/ml) | 0.69 | 0.66 | 0.62 | 0.66 | 0.63 |
| Carr's Index | 8.5 | 8.1 | 8.5 | 9.2 | 9.9 |
| Flowability | Excellent | Excellent | Excellent | Excellent | Excellent |

As a result, it was confirmed that as the sprayed biomass fermented solution content was increased, that is, as the core material content in the final sample was decreased, the Carr's index value was reduced, and the flowability was increased.

**Claims**

1.  A preparation method of biomass granules, comprising:

    1) preparing a biomass fermented solution or a concentrated solution; and
    2) spraying and coating the fermented solution or concentrated solution of 1) on a core material to form biomass granules.

2.  The preparation method of biomass granules according to claim 1, wherein the biomass fermented solution or concentrated solution of the step 1) comprises microalgae of the genus *Schizochytrium* or the genus *Thraustochytrium.*

3.  The preparation method of biomass granules according to claim 1, wherein the core material of the step 2) is an amino acid or a plant-derived protein.

4.  The preparation method of biomass granules according to claim 3, wherein the amino acid is at least one selected from the group consisting of lysine, methionine, histidine and arginine.

5.  The preparation method of biomass granules according to claim 1, wherein the plant-derived protein is a soy protein concentrate or soy bean molasses.

6.  The preparation method of biomass granules according to claim 1, wherein the step 2) is performed using a fluidized bed granulator.

7.  The preparation method of biomass granules according to claim 1, wherein the step 2) is performed in a bottom spray coating method.

8.  The preparation method of biomass granules according to claim 1, wherein the biomass granules comprise 5 to 30 % by weight of the core material based on the total biomass granules.

9.  The preparation method of biomass granules according to claim 8, wherein the biomass granules contain the core material and comprise a protein content of 15% by weight or more based on the total weight of the biomass granules.

10. The preparation method of biomass granules according to claim 1, wherein the biomass granules have improved flowability to a Carr's index of 15 or less.

11. A biomass granule with improved flowability, comprising a core material which is an amino acid or a plant-derived protein, and a biomass fermented solution or a concentrated solution, wherein the core material is coated with the biomass fermented solution or concentrated solution.

12. The biomass granule according to claim 11, wherein the biomass granule comprises 5 to 30 % by weight of the core material based on the total biomass granules.

13. The biomass granule according to claim 11, wherein the biomass fermented solution or concentrated solution comprises microalgae of the genus *Schizochytrium* or the genus *Thraustochytrium.*

14. The biomass granule according to claim 11, wherein the amino acid is at least one selected from the group consisting of lysine, methionine, histidine and arginine.

15. The biomass granule according to claim 11, wherein the plant-derived protein is a soy protein concentrate or soy bean molasses.

16. The biomass granule according to claim 11, wherein the biomass granule contains the core material and comprises a protein content of 15% by weight or more based on the total weight of the biomass granule.

17. The biomass granule according to claim 11, wherein the biomass granules have improved flowability to a Carr's index of 15 or less.

18. The biomass granule according to any one claim of claim 11 to claim 17, wherein the biomass granule is prepared by the preparation method of claim 1.

<div align="center">

**INTERNATIONAL SEARCH REPORT**

</div>

| | |
|---|---|
| | International application No. |
| | **PCT/KR2022/019336** |

**A.　CLASSIFICATION OF SUBJECT MATTER**

**A23L 17/60**(2016.01)i; **A23L 33/175**(2016.01)i; **A23L 33/185**(2016.01)i; **A23P 10/20**(2016.01)i; **A23P 20/18**(2016.01)i; **A23P 20/10**(2016.01)i

According to International Patent Classification (IPC) or to both national classification and IPC

**B.　FIELDS SEARCHED**

Minimum documentation searched (classification system followed by classification symbols)

A23L 17/60(2016.01); A23K 1/00(2006.01); A23K 1/16(2006.01); A23K 10/16(2016.01); A23L 1/30(2006.01); A23L 33/195(2016.01); C02F 3/34(2006.01); C12P 1/02(2006.01)

Documentation searched other than minimum documentation to the extent that such documents are included in the fields searched

　　Korean utility models and applications for utility models: IPC as above
　　Japanese utility models and applications for utility models: IPC as above

Electronic data base consulted during the international search (name of data base and, where practicable, search terms used)

　　eKOMPASS (KIPO internal) & keywords: 바이오매스(biomass), 코어(core), 과립(granule), 코팅(coat)

**C.　DOCUMENTS CONSIDERED TO BE RELEVANT**

| Category* | Citation of document, with indication, where appropriate, of the relevant passages | Relevant to claim No. |
|---|---|---|
| X | KR 10-2006-0033789 A (DEGUSSA AG) 19 April 2006 (2006-04-19)<br>　　See claims 1-17; and paragraphs [0034]-[0035]. | 1,3-12,14-18 |
| Y | | 2,13 |
| Y | KR 10-2018-0029249 A (FERMENTALG et al.) 20 March 2018 (2018-03-20)<br>　　See claims 1-6. | 2,13 |
| A | KR 10-2021-0151343 A (ASUNG TOTAL SOLUTION CO., LTD.) 14 December 2021 (2021-12-14)<br>　　See entire document. | 1-18 |
| A | US 2003-0037415 A1 (ALT, H. C. et al.) 27 February 2003 (2003-02-27)<br>　　See entire document. | 1-18 |
| A | JP 2011-004765 A (DSM IP ASSETS B.V.) 13 January 2011 (2011-01-13)<br>　　See entire document. | 1-18 |

☐ Further documents are listed in the continuation of Box C.　　☑ See patent family annex.

| | |
|---|---|
| *　　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **08 March 2023** | **08 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/019336**

| Patent document cited in search report | | | Publication date (day/month/year) | Patent family member(s) | | | Publication date (day/month/year) |
|---|---|---|---|---|---|---|---|
| KR | 10-2006-0033789 | A | 19 April 2006 | CN | 100452983 | C | 21 January 2009 |
| | | | | CN | 101317628 | A | 10 December 2008 |
| | | | | CN | 1835685 | A | 20 September 2006 |
| | | | | EP | 1643853 | A2 | 12 April 2006 |
| | | | | EP | 1643853 | B1 | 24 October 2007 |
| | | | | EP | 1884168 | A1 | 06 February 2008 |
| | | | | KR | 10-1442946 | B1 | 23 September 2014 |
| | | | | KR | 10-2013-0010088 | A | 25 January 2013 |
| | | | | US | 2005-0025878 | A1 | 03 February 2005 |
| | | | | US | 2009-0196954 | A1 | 06 August 2009 |
| | | | | US | 7521080 | B2 | 21 April 2009 |
| | | | | WO | 2005-006875 | A2 | 27 January 2005 |
| | | | | WO | 2005-006875 | A3 | 24 March 2005 |
| KR | 10-2018-0029249 | A | 20 March 2018 | CN | 108026503 | A | 11 May 2018 |
| | | | | EP | 3325605 | A1 | 30 May 2018 |
| | | | | JP | 2018-528785 | A | 04 October 2018 |
| | | | | US | 2018-0208886 | A1 | 26 July 2018 |
| | | | | WO | 2017-012931 | A1 | 26 January 2017 |
| KR | 10-2021-0151343 | A | 14 December 2021 | | None | | |
| US | 2003-0037415 | A1 | 27 February 2003 | WO | 03-004143 | A1 | 16 January 2003 |
| JP | 2011-004765 | A | 13 January 2011 | CN | 101928213 | A | 29 December 2010 |
| | | | | CN | 101928213 | B | 05 December 2012 |
| | | | | CN | 102304036 | A | 04 January 2012 |
| | | | | CN | 102351678 | A | 15 February 2012 |
| | | | | CN | 104017734 | A | 03 September 2014 |
| | | | | CN | 1217029 | A | 19 May 1999 |
| | | | | CN | 1226923 | A | 25 August 1999 |
| | | | | CN | 1226923 | B | 15 June 2011 |
| | | | | CN | 1715394 | A | 04 January 2006 |
| | | | | EP | 0894142 | A2 | 03 February 1999 |
| | | | | EP | 0894142 | B1 | 31 May 2006 |
| | | | | EP | 0894142 | B2 | 20 November 2013 |
| | | | | EP | 0906414 | A2 | 07 April 1999 |
| | | | | EP | 0906414 | B1 | 10 September 2003 |
| | | | | EP | 0906414 | B2 | 12 August 2015 |
| | | | | EP | 1369474 | A1 | 10 December 2003 |
| | | | | EP | 1506996 | A2 | 16 February 2005 |
| | | | | EP | 1506996 | A3 | 14 June 2006 |
| | | | | EP | 2251410 | A2 | 17 November 2010 |
| | | | | EP | 2251410 | A3 | 28 September 2011 |
| | | | | EP | 2251411 | A2 | 17 November 2010 |
| | | | | EP | 2251411 | A3 | 12 October 2011 |
| | | | | EP | 2251412 | A2 | 17 November 2010 |
| | | | | EP | 2251412 | A3 | 28 September 2011 |
| | | | | EP | 2264142 | A2 | 22 December 2010 |
| | | | | EP | 2264142 | A3 | 28 September 2011 |
| | | | | EP | 2280062 | A2 | 02 February 2011 |
| | | | | EP | 2280062 | A3 | 28 September 2011 |
| | | | | JP | 2000-508888 | A | 18 July 2000 |
| | | | | JP | 2002-502233 | A | 22 January 2002 |

Form PCT/ISA/210 (patent family annex) (July 2022)

14

**INTERNATIONAL SEARCH REPORT**
Information on patent family members

International application No.

**PCT/KR2022/019336**

| Patent document cited in search report | Publication date (day/month/year) | Patent family member(s) | | Publication date (day/month/year) |
|---|---|---|---|---|
| | | JP | 2006-000116 A | 05 January 2006 |
| | | JP | 2007-270150 A | 18 October 2007 |
| | | JP | 2008-054691 A | 13 March 2008 |
| | | JP | 2009-179805 A | 13 August 2009 |
| | | JP | 2010-099075 A | 06 May 2010 |
| | | JP | 2010-187682 A | 02 September 2010 |
| | | JP | 2011-024598 A | 10 February 2011 |
| | | JP | 2011-130773 A | 07 July 2011 |
| | | JP | 2011-132544 A | 07 July 2011 |
| | | JP | 2011-132545 A | 07 July 2011 |
| | | JP | 2013-252148 A | 19 December 2013 |
| | | JP | 2014-051680 A | 20 March 2014 |
| | | JP | 4263708 B2 | 13 May 2009 |
| | | JP | 4545235 B2 | 15 September 2010 |
| | | JP | 4958729 B2 | 20 June 2012 |
| | | US | 2001-0025114 A1 | 27 September 2001 |
| | | US | 2003-0143659 A1 | 31 July 2003 |
| | | US | 2004-0049062 A1 | 11 March 2004 |
| | | US | 2009-0326267 A1 | 31 December 2009 |
| | | US | 2015-0025260 A1 | 22 January 2015 |
| | | US | 6255505 B1 | 03 July 2001 |
| | | US | 6441208 B2 | 27 August 2002 |
| | | US | 6727373 B2 | 27 April 2004 |
| | | WO | 97-36996 A2 | 09 October 1997 |
| | | WO | 97-36996 A3 | 22 January 1998 |
| | | WO | 97-37032 A2 | 09 October 1997 |
| | | WO | 97-37032 A3 | 31 December 1997 |

Form PCT/ISA/210 (patent family annex) (July 2022)

**REFERENCES CITED IN THE DESCRIPTION**

**Patent documents cited in the description**

- KR 1020210190175
- KR 1020120055918
- KR 1020120125194
- KR 101298942